Europäisches Patentamt

European Patent Office

Office européen des brevets

(11) Veröffentlichungsnummer : **0 156 973**
**B1**

# EUROPÄISCHE PATENTSCHRIFT

(45) Veröffentlichungstag der Patentschrift :
27.07.88

(21) Anmeldenummer : 84114904.0

(22) Anmeldetag : 07.12.84

(51) Int. Cl.⁴ : **G 02 F   1/133**

(54) **Verfahren zur Orientierung einer flüssigkristallinen Substanz bezüglich einer Unterlage.**

(30) Priorität : 23.03.84 DE 3410789

(43) Veröffentlichungstag der Anmeldung :
09.10.85 Patentblatt 85/41

(45) Bekanntmachung des Hinweises auf die Patenterteilung : 27.07.88 Patentblatt 88/30

(84) Benannte Vertragsstaaten :
**CH DE FR GB IT LI NL**

(56) Entgegenhaltungen :
**Keine Entgegenhaltungen**

(73) Patentinhaber : **Siemens Aktiengesellschaft Berlin und München**
**Wittelsbacherplatz 2**
**D-8000 München 2 (DE)**

(72) Erfinder : **Formanek, Helmut, Dr. rer. nat.**
**Römerhofweg 51**
**D-8046 Garching (DE)**
Erfinder : **Weyl, Reinhard, Dr. rer. nat.**
**Waldstrasse 16**
**D-8019 Assling (DE)**

## Beschreibung

Die Erfindung betrifft ein Verfahren zur Orientierung einer flüssigkristallinen Substanz nach dem Oberbegriff des Anspruchs 1.

Die Eigenschaften von flüssigkristallinen Substanzen können aufgrund optisch feststellbarer Texturumwandlung für Anzeigevorrichtungen (displays) und für die Thermographie genutzt werden.

Die Thermographie, d. h. die Messung von Temperaturverteilungen auf Oberflächen, gewinnt für die Entwicklung und Qualitätsanalyse von integrierten Schaltungen oder von sonstigen stromdurchflossenen elektrischen Bauteilen zunehmend an Bedeutung. Das zur Zeit empfindlichste Verfahren zur Bestimmung von « hot spots » (lokal begrenzten thermisch belasteten Bereichen) ist die Temperaturmessung mit Flüssigkristall-Schichten im Polarisationsmikroskop. Dabei sind Flüssigkristall-Schichten auf die zu untersuchenden Oberflächen aufgebracht. Das Studium der Doppelbrechung des Flüssigkristalls dient dabei im polarisierten Licht zur Ermittlung von Strukturen dieses Flüssigkristalles. Aus Strukturveränderungen der Flüssigkristall-Schicht auf der zu untersuchenden Oberfläche kann auf Temperaturunterschiede innerhalb der zu untersuchenden Oberfläche geschlossen werden. Aus den Temperaturunterschieden innerhalb der zu untersuchenden Oberfläche kann dann wiederum auf elektrische Eigenschaften innerhalb dieser Oberfläche geschlossen werden.

Wenn eine Flüssigkristall-Schicht auf die Oberfläche eines integrierten Schaltkreises aufgebracht worden ist, kann auch aus der Intensität der Reflexion eines Laserstrahles durch das System Flüssigkristall-Schicht/Oberfläche auf die Spannung derjenigen Stelle auf der Oberfläche geschlossen werden, auf die der Laserstrahl auftrifft.

Das Prinzip eines « hot spot »-Detektors ist in der PCT-Patentanmeldung WO-A-83/01989 beschrieben. Diese PCT-Patentanmeldung beruht auf einer US-Patentanmeldung mit der Anmeldenummer 326, 224 vom 1.12.1981.

Zur technischen Nutzung der Eigenschaften flüssigkristalliner Substanzen ist eine einheitliche Orientierung ihrer Moleküle über größere Flächenbereiche hinweg nötig. Diese Orientierung kann durch geeignete Behandlungsmethoden derjenigen Oberflächen erreicht werden, die mit den flüssigkristallinen Substanzen in Berührung kommen.

Bisher wurden Oberflächen, die mit den flüssigkristallinen Substanzen in Berührung kommen, durch Reiben, chemisches Ätzen, Überschichten mit Kunststoffen, Organosilanen oder amphipatischen Substanzen, wie Lecithin, behandelt. Beispielsweise ist in der US-A-3 728 008 die Chemisorption eines Silanderivats auf denjenigen Oberflächen einer Flüssigkristall-Anzeigevorrichtung beschrieben, die mit der flüssigkristallinen Substanz in Berührung kommen. Das chemisorbierte Silanderivat soll eine klare Anzeige bewirken und den Kontrast der Anzeige verbessern.

Der Erfindung liegt die Aufgabe zugrunde, ein Verfahren der eingangs genannten Art anzugeben, das einfach zu verwenden ist, das langanhaltend und zuverlässig wirkt, das besonders billig durchzuführen ist, das einen hohen Orientierungsgrad der flüssigkristallinen Moleküle und damit eine klare Anzeige ermöglicht und das einen besonders starken Kontrast zwischen verschiedenen Phasen der flüssigkristallinen Substanz herbeiführt.

Diese Aufgabe wird erfindungsgemäß durch ein Verfahren nach dem Anspruch 1 gelöst.

Ausgestaltungen und Vorteile der Erfindung sind in den Unteransprüchen, der Beschreibung und der Zeichnung dargestellt.

Eine Parallelorientierung der Molekül-Längsachsen, insbesondere von nematisch-flüssigkristallinen Substanzen bezüglich ihrer Unterlage, kann gemäß der Erfindung besonders wirksam durch eine vorhergehende Behandlung der Unterlage mit Lösungen von Steroiden und/oder Porphyrin-Farbstoffen in Wasser und/oder organischen Lösungsmitteln erreicht werden.

Die Erfindung wird anhand der Zeichnung näher erläutert.

Fig. 1 mit 4 erläutern erfindungsgemäße Verfahren zur Behandlung einer Unterlage für eine flüssigkristalline Substanz.

Fig. 5 erläutert das Ergebnis eines erfindungsgemäßen Verfahrens bei einer Flüssigkristall-Anzeigevorrichtung.

Fig. 6 erläutert das Ergebnis eines erfindungsgemäßen Verfahrens bei der Durchführung von Thermographie-Messungen.

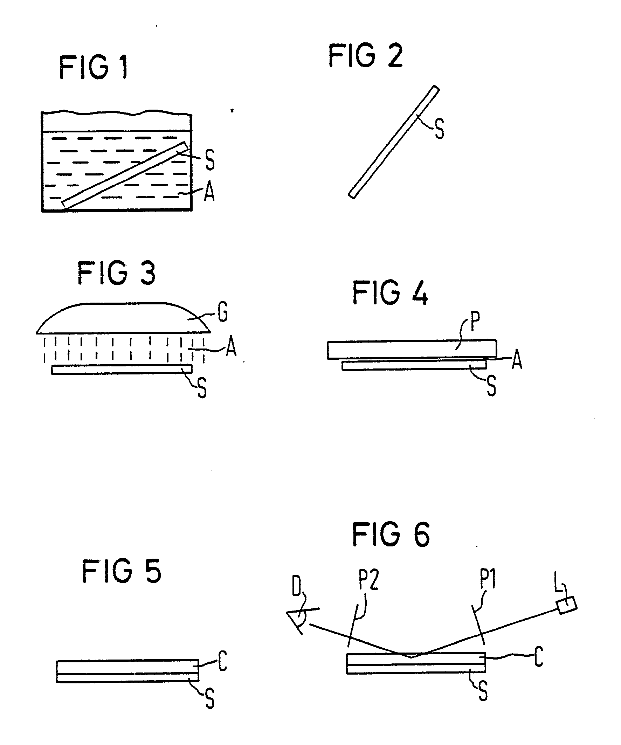

In den Fig. 1 mit 4 sind verschiedene erfindungsgemäße Verfahren zur Behandlung der Oberfläche einer Unterlage S für eine flüssigkristalline Substanz C dargestellt. Eine Glasplatte S wird in Fig. 1 in eine 0,01 %ige Lösung A eines Steroids oder eines Porphyrin-Farbstoffes oder einer Kombination von wenigstens einem Steroid und/oder wenigstens einem Porphyrin-Farbstoff in Wasser und/oder einem organischen Lösungsmittel eingetaucht. Die angegebene Konzentration der Lösung A muß bezüglich eines erfindungsgemäßen Verfahrens nicht besonders genau eingehalten werden. Ein erfindungsgemäßes Verfahren kann auch mit einer 0,05 %igen Lösung A der angegebenen Art oder beispielsweise mit einer 0,005 %igen Lösung A der angegebenen Art durchgeführt werden.

Durch Kippen oder Senkrechtstellen der Unterlage (Objektträger) S fließt der größte Teil des Lösungsmittels von der Oberfläche der Unterlage S ab. Der Rest der Lösung A trocknet auf der Oberfläche der Unterlage S ein. Eine so behandelte Oberfläche einer Unterlage S unterscheidet sich optisch nicht von einer unbehandelten Oberfläche einer Unterlage S derselben Art. Dies bedeutet gegenüber dem Stand der Technik einen besondere Vorteil, weil die optischen Eigenschaften einer Flüssigkristall-Anzeigevorrichtung oder eines Thermographie-Objekts nicht von einem Haftvermittler, wie beispielsweise einem Kunststoff, einem Organosilan oder Lecithin, in einer nicht gewünschten Weise beeinflußt werden, und weil andererseits ein erfindungsgemäßes Verfahren zuverlässig und langanhaltend wirkt im Gegensatz zu einer Oberflächenbehandlung durch Reiben, das zwar ebenfalls die optischen Eigenschaften einer Unterlage S nicht verändert, deren Wirkung jedoch nach kurzer Zeit bereits verschwunden ist.

Gerade bei der Thermographie-Untersuchung von elektronischen Bauelementen würde ein Überschichten der Oberfläche eines elektronischen Bauelementes mit Kunststoffen oder anderen dergleichen Stoffen eine Untersuchung von Eigenschaften des elektronischen Bauelementes erschweren, weil die Übermittlung von Informationen über die Eigenschaften der Unterlage S durch eine solche Schicht, wie Kunststoff, stark gedämpft sein würde. Ein erfindungsgemäßes Verfahren ermöglicht daneben einen klaren und kontrastreichen Betrieb einer Flüssigkristall-Anzeige in Transmissionsbetrieb, der ebenfalls durch ein Beschichten der Unterlage S mit Kunststoff oder dergleichen sehr erschwert sein würde.

Schließlich muß beim Überschichten einer Unterlage S mit Kunststoffen und dergleichen darauf geachtet werden, daß diese zusätzlichen Schichtstoffe (Haftvermittler), wie Kunststoffe und dergleichen, möglichst gleichmäßig aufgebracht werden, was nur mit einem großen Aufwand möglich ist. Da bei einem erfindungsgemäßen Verfahren der größte Teil des Lösungsmittels von selbst von der Unterlage S abfließen kann und der Rest der Lösung A von Natur aus in der erforderlichen Gleichmäßigkeit auf der Oberfläche der Unterlage S eintrocknet, ist ein erfindungsgemäßes Verfahren wesentlich billiger durchführbar als ein Verfahren nach dem Stand der Technik, das ebenfalls langanhaltend wirken würde.

Fig. 2 zeigt das Kippen der Unterlage S, damit nach einem Benetzen oder sonstigen Aufbringen der Lösung A auf die Oberfläche dieser Unterlage S der größte Teil des Lösungsmittels abfließen kann.

Fig. 3 zeigt als Unterlage S eine waagrecht liegende Glasplatte mit einer Fläche von 2,5 × 7,6 cm². Diese Unterlage S wird mit etwa 0,1 ml einer oben beschriebenen Lösung A aus einer Sprühvorrichtung G benetzt. Durch anschließendes Kippen, insbesondere durch anschließendes Senkrechtstellen der Unterlage S fließt wiederum der größte Teil des Lösungsmittels ab. Der Rest der Lösung A trocknet auf der Oberfläche der Unterlage S wiederum ein.

Fig. 4 zeigt ein weiteres erfindungsgemäßes Verfahren. Dabei wird mit einem Träger P, der mit der Lösung A benetzt ist, durch Drücken einer mit der Lösung A benetzten Oberfläche des Trägers P auf eine Oberfläche der Unterlage S die Oberfläche der Unterlage S mit einer geeigneten Menge der Lösung A benetzt. Der Träger P kann als feiner Schwamm, Gummi, Kunststoff oder dergleichen ausgebildet sein.

Wird auf eine Glasplatte, wie sie anhand der Fig. 3 beschrieben worden ist, etwa 0,1 ml einer Lösung von N-(p-Methoxybenzyliden)-p-n-butylanilin, beispielsweise einer nematischflüssigkristallinen Substanz in Hexan als Lösungsmittel gleichmäßig auf die waagrecht liegende Glasplatte aufgegeben und eingetrocknet, so sind in Abhängigkeit von der Oberflächenbehandlung der Glasplatte folgende Erscheinungen zu beobachten :

Wenn die Oberfläche der Glasplatte unbehandelt ist, zieht sich nach dem Verdunsten des Lösungsmittels (Hexan) des Flüssigkristalles die flüssigkristalline Substanz zu einzelnen Tropfen zusammen. Die oben angegebene, in Hexan gelöste flüssigkristalline Substanz wird allgemein mit der Kurzformel MBBA bezeichnet.

Ist die Oberfläche der Glasplatte mit einem Verfahren nach der Erfindung behandelt worden, so verbleibt nach dem Verdunsten des Lösungsmittels (Hexan) der flüssigkristallinen Substanz MBBA eine gleichmäßige flüssigkristalline Schicht auf dem Objektträger. Im Polarisationsmikroskop erscheinen die geordneten Bereiche der flüssigkristallinen Schicht leuchtend hell bei Winkelstellungen von 45° zwischen den gekreuzten Polarisatoren.

Eine erfindungsgemäße Oberflächenbehandlung der Glasplatte (Unterlage S) wurde dabei mit folgenden Lösungen A durchgeführt :

0,01 %ige Lösung von Desoxycholsäure in abs. Äthanol,

0,01 %ige Lösung des Natriumsalzes von Desoxycholsäure in Wasser,

0,01 %ige Lösung von Saponin in Wasser

0,01 %ige Lösung von Taurocholsäure in Wasser

0,01 %ige Lösung von Hämin in 0,01 n NaOH

0,01 %ige Lösung von Alcianblau in abs. Äthanol

0,01 %ige Lösung von Alcianblau in Wasser.

In der Fig. 5 ist schematisch eine Unterlage S dargestellt, deren Oberfläche mit einem Verfahren nach der Erfindung behandelt worden ist und auf der gleichmäßig eine Flüssigkristallschicht C verbleibt. Eine solche Anordnung nach Fig. 5 eignet sich besonders zur Verwendung in einer Flüssigkristall-Anzeigevorrichtung.

Fig. 6 zeigt eine Unterlage S, die ebenfalls mit einem Verfahren nach der Erfindung behandelt worden ist. Auf dieser Unterlage S, beispielsweise einer nicht-passivierten oder einer passivierten Oberfläche eines integrierten elektronischen Bausteines, verbleibt ebenfalls eine gleichmäßige flüssigkristalline Schicht C. Die Temperatur der flüssigkristallinen Schicht C wird so eingestellt, daß sie etwa 1/2 K unter derjenigen Temperatur ist, bei der die flüssigkristalline Substanz C in ihren amorphen, nicht-kristallinen Zustand übergeht. Von einer Lichtquelle L aus wird durch einen ersten Polarisator P1 hindurch eine zu untersuchende Stelle auf der Oberfläche der Unterlage S mit Licht bestrahlt. Dieses Licht wird an dem System Flüssigkristall-Schicht C/Oberfläche der Unterlage S reflektiert. Dieses reflektierte Licht gelangt durch einen zweiten Polarisator P2 hindurch zu einem Detektor D, beispielsweise einem menschlichen Auge. Die Polarisatoren P1, P2 sind gekreuzt angeordnet. Wird als Flsüssigkristall beispielsweise MBBA verwendet, sind die beiden gekreuzten Polarisatoren P1, P2 bei Winkelstellungen von 45° zueinander angeordnet, so erscheint ein kristalliner Bereich des Flüssigkristalles C beim Detektor D hell. Ist aufgrund einer Temperaturerhöhung ein Bereich des Flüssigkristalles C in den amorphen Zustand übergegangen, so wird das polarisierte Licht in diesem amorphen Bereich gestreut, und der sonst klare Flüssigkristall C erscheint in der Reflexion beim Detektor D dunkel.

Bei einem Thermographie-Verfahren nach Fig. 6 betragen die Ortsauflösung einige Mikrometer und die thermische Auflösung einige wenige 0,1 K. Diesen Auflösungen entspricht eine Nachweisgrenze für die Heizleistung eines « hot spot » von etwa 1 mW.

Im folgenden werden einzelne Klassen chemischer Verbindungen beschrieben, die eine Parallelorientierung der Molekül-Längsachsen flüssigkristalliner Substanzen C bezüglich ihrer Unterlage S verursachen.

## Steroide

A) Gallensäuren sind Steroide, die als verdauungsfördernde Inhaltsstoffe der Galle bekannt sind. Sie sind oberflächenaktiv und wirken daher emulgierend auf Fette. Die wichtigsten Gallensäuren sind Derivate der Cholsäure und der Desoxycholsäure. Desoxycholsäure bildet mit Fetten und anderen Lipiden Einschlußverbindungen, die sogenannten wasserlöslichen Choleinsäuren, wobei z. B. je ein Molekül Palmitin- oder Stearinsäure von acht Molekülen Desoxycholsäure umgeben wird.

B) Saponine sind glycosidische pflanzliche Steroide, die schäumende wässrige Lösungen bilden und daher als Reinigungsmittel verwendet worden sind (Seifenkraut). Typische Saponine sind auch die herzwirksamen Digitalisglycoside und die Krötengifte.

Porphyrine und Phtalocyanine : Diese chemischen Verbindungen bestehen aus einem Ringsystem mit fortlaufend konjugierten Doppelbindungen. Als mesomere Systeme sind sie eben gebaut und enthalten in ihrem Zentrum ein Metall-Atom gebunden. Porphyrinringe liegen im Hämin des roten Blutfarbstoffes (Hämoglobin) und im Chlorophyll der grünen Blätter vor. Alcianblau ist ein wasserlösliches Derivat des in allen anorganischen und organischen Lösungsmitteln fast unlöslichen Farbstoffes Kupferphtalocyanin.

Mit einem erfindungsgemäßen Verfahren können nicht nur nematisch-flüssigkristalline Substanzen, sondern jeder beliebige Flüssigkristall orientiert werden.

## Patentansprüche

1. Verfahren zur Orientierung einer flüssigkristallen Substanz (C) bezüglich einer Unterlage (S), dadurch gekennzeichnet, daß vor Aufbringen der flüssigkristallinen Substanz (C) auf die Unterlage (S) die Oberfläche dieser Unterlage (S) mit einer Lösung (A) von Steroiden und/oder Porphyrin-Farbstoffen in Wasser oder organischen Lösungsmitteln behandelt wird.

2. Verfahren nach Anspruch 1, dadurch gekennzeichnet, daß die Unterlage (S) mit einer 0,005 %igen bis 0,05 %igen Lösung (A) behandelt wird.

3. Verfahren nach Anspruch 1, dadurch gekennzeichnet, daß die Unterlage (S) mit einer 0,01 %igen Lösung behandelt wird.

4. Verfahren nach einem der Ansprüche 1 bis 3, dadurch gekennzeichnet, daß die Unterlage (S) mit der Lösung (A) benetzt wird und daß dann zum Abfließen eines Teiles der Lösung (A) die Unterlage (S) gekippt wird.

5. Verfahren nach einem der Ansprüche 1 bis 4, dadurch gekennzeichnet, daß die Unterlage (S) mit der Lösung (A) besprüht wird.

6. Verfahren nach einem der Ansprüche 1 bis 4, dadurch gekennzeichnet, daß die Unterlage (S) in die Lösung (A) eingetaucht wird.

7. Verfahren nach einem der Ansprüche 1 bis 4, dadurch gekennzeichnet, daß ein Träger (P), auf dem sich die Lösung (A) befindet, auf die Unterlage (S) gedrückt wird.

## Claims

1. A method of orientating a liquid crystal substance (C) relative to a substrate (S), characterised in that prior to the application of the liquid crystal substance (C) to the substrate (S), the surface of this substrate (S) is treated with a solution (A) of steroids and/or porphyrin dyes in water or organic solvents.

2. A method as claimed in Claim 1, characterised in that the substrate (S) is treated with a 0.005 % to 0.05 % solution (A).

3. A method as claimed in Claim 1, characterised in that the substrate (S) is treated with a 0.01 % solution.

4. A method as claimed in one of Claims 1 to 3, characterised in that the substrate (S) is wetted with the solution (A) and the substrate (S) is then tilted to permit part of the solution (A) to drain off.

5. A method as claimed in one of Claims 1 to 4, characterised in that the substrate (S) is sprayed with the solution (A).

6. A method as claimed in one of Claims 1 to 4, characterised in that the substrate (S) is immersed in the solution (A).

7. A method as claimed in one of Claims 1 to 4, characterised in that a carrier (P), to which the solution (A) has been applied, is pressed on to the substrate (S).

## Revendications

1. Procédé d'orientation d'une substance cristalline liquide (C) par rapport à un substrat (S), caractérisé en ce qu'il consiste à traiter, avant le dépôt de la substance cristalline liquide (C) sur le substrat (S), la surface de ce substrat (S) par une solution (A) de stéroïdes et/ou de colorants à base de porphyrine dans de l'eau ou dans des solvants organiques.

2. Procédé suivant la revendication 1, caractérisé en ce qu'il consiste à traiter le substrat (S) par une solution (A) ayant une concentration de 0,005 à 0,05 %.

3. Procédé suivant la revendication 1, caractérisé en ce qu'il consiste à traiter le substrat (S) par une solution à 0,01 %.

4. Procédé suivant l'une des revendications 1 à 3, caractérisé en ce qu'il consiste à mouiller le substrat (S) par la solution (A), puis à faire basculer le substrat (S) pour faire s'écouler une partie de la solution (A).

5. Procédé suivant l'une des revendications 1 à 4, caractérisé en ce qu'il consiste à pulvériser la solution (A) sur le substrat (S).

6. Procédé suivant l'une des revendications 1 à 4, caractérisé en ce qu'il consiste à immerger le substrat (S) dans la solution (A).

7. Procédé suivant l'une des revendications 1 à 4, caractérisé en ce qu'il consiste à presser sur le substrat (S) un support (P) sur lequel se trouve la solution (A).

0 156 973

FIG 1

FIG 2

S

S
A

FIG 3

G
A

S

FIG 4

P
A

S

FIG 5

C

S

FIG 6

D    P2         P1    L

C

S

1